Europäisches Patentamt

**European Patent Office**

**Office européen des brevets**

(19)

(11) Publication number: **0 098 820**
A2

(12)

# EUROPEAN PATENT APPLICATION

(21) Application number: **83850173.2**

(22) Date of filing: **20.06.83**

(51) Int. Cl.³: **E 03 F 5/14**

(30) Priority: **05.07.82 SE 8204127**

(43) Date of publication of application: **18.01.84**
**Bulletin 84/3**

(84) Designated Contracting States: **AT CH DE FR GB IT LI
SE**

(71) Applicant: **HYDROPRESS WALLANDER & CO AB,
Flöjelbergsgatan 11, S-431 37 Mölndal (SE)**

(72) Inventor: **Wallander, Carl, Vaglängdsgatan 24,
S-421 33 Västra Frölunda (SE)**

(74) Representative: **MacFie, W.R. et al, Backers Patentbyra
AB Drottninggatan 15, S-41114 Göteborg (SE)**

(54) **A device adapted to collect and to discharge solid matter.**

(57) A device for collecting and discharging solid refuse matter, flowing in sewers includes a grid (15) comprising stationary and displaceable bars (17, 18). The edges of the bars turned towards the flow of water are stepped and the terraces (19) of the steps form the lifting part of a conveyor.

The pattern of movement at the displaceable bars is such that a vertical net component of movement is obtained at the lifting parts.

A DEVICE ADAPTED TO COLLECT AND TO DISCHARGE SOLID MATTER

The present invention refers to a device for collecting and discharging solid matter, flowing in sewers.

The aim of the invention is to propose a simple and efficient device for collecting and discharging waste matter with a minimum of disturbance in the flow in the sewer conduit and having sufficient capacity for use also with large sewer conduits and culverts.

Previously known devices for collecting and discharging refuse have included a stationary grid arranged transversely with respect to the sewer conduit, cooperating with a vertically reciprocable fork device, or with continuous filter webs of different designs and mesh widths. For operational efficiency it is unfavourable to have shafts, pulleys and other parts of the driving mechanism below the water level, as fibrous waste matter easily collects upon such parts.

The fork devices have certain advantages, but as parts of the driving mechanism preferably should not project below the water level, a rather high mounting structure will be required. The height thereof will increase with the depth of the sewer conduit, as well as with the level of discharge for the collected matter.

The continuous filter webs suffer from certain disadvantages. The downwardly moving portion of the web will always turn its inward face towards the direction of water flow. This means that particles having passed through the upwardly moving portion of the web may be caught upon the inward face of the web, and will be pressed into the same when the web passes over the lead rollers or the like.

Grid structures including reciprocable bars are known in the art, but they have not operated satisfactorily in sewers, neither with respect to collecting capacity, nor with respect to simplicity and reliability.

In order to set aside the disadvantages mentioned above the present invention, in a broad sense, proposes a device for collecting and discharging solid matter, especially agglomerated refuse matter, flowing in sewers, and comprising a grid structure extending into the sewer. The device is characterized in that the grid structure is arranged obliquely with respect to the flow of sewage water, and includes alternate stationary bars and displaceable bars, the edges of said bars turned towards the flow direction of the water being uniformly stepped, and the displaceable bars being interconnected to form at least one unit, operated by a mechanism adapted to impart a movement upon the bars so any point at the portions thereof adapted to collect and to discharge matter performs a closed circuitous path including a vertical component of movement within each path.

The inclination of the bars is advantageously selected so the terraces of the steps are, in use, substantially horizontally orientated, the terraces being about as broad as the steps are high.

The displaceable bars, within each unit, are preferably interconnected by a beam structure running transversely below the bars, the operating mechanism comprising a pair of rods projecting from the beam structure and arranged substantially perpendicularly to the plane of the bars, as well as a further rod attached to each displaceable bar located outmost in the unit of bars, said arms each carrying an eccentric disc, interconnected in pairs by chains and driven by a common power source.

In a preferred embodiment the top of the grid communicates with a further conveyor preferably a compacting conveyor, for removing the collected matter.

One embodiment of the invention will below be described with reference to the accompanying drawings, in which

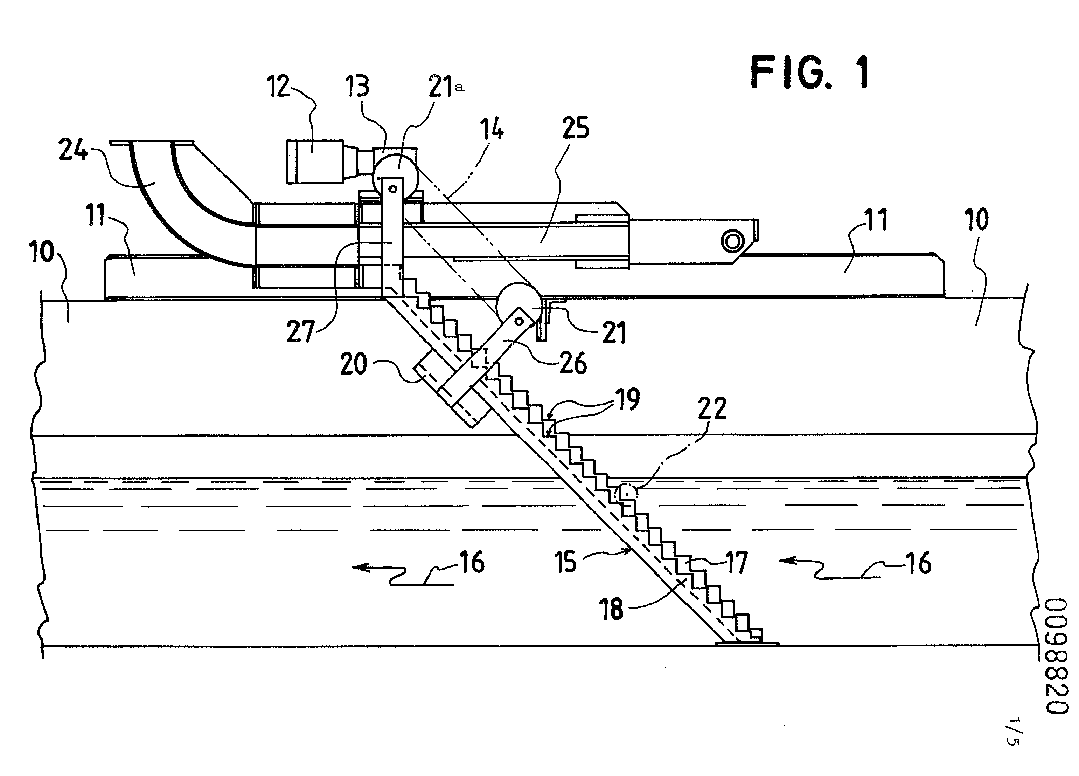

Figure 1 schematically shows an elevation of a collecting and discharging device according to the invention mounted in a sewer conduit,

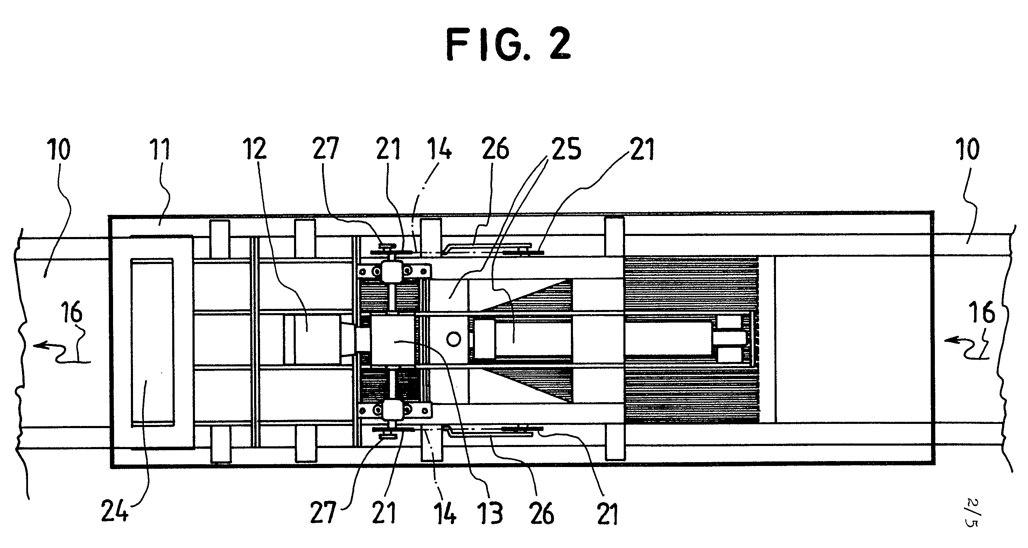

Figure 2 shows the device according to Figure 1, as viewed from above,

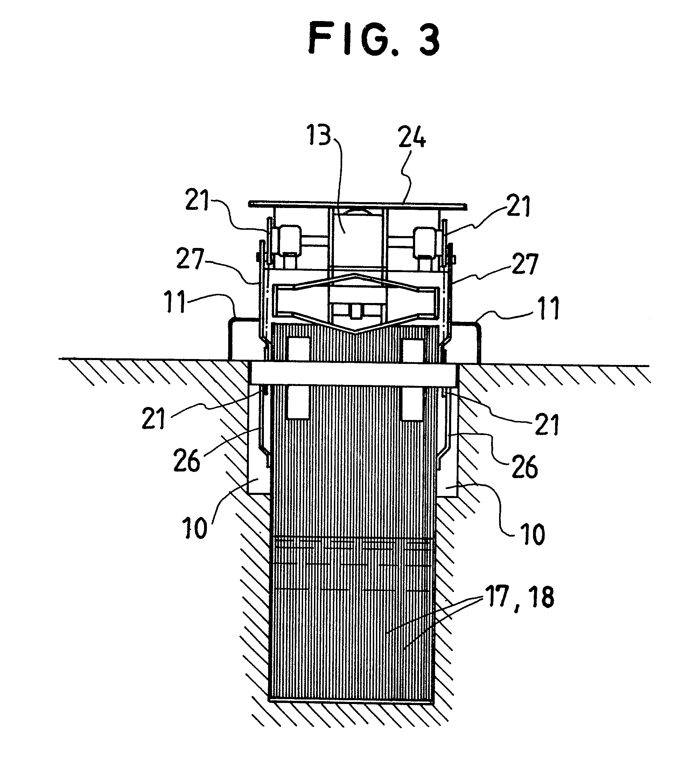

Figure 3 shows an end view of the device.

Figure 4 shows a side view of parts of two bars,

Figure 5 shows a view as seen from above of the bars in Figure 4, and

Figures 6 - 11 show interrelated positions of the two bar parts of Figure 4 during one operating cycle.

In the drawings reference 10 denotes a sewer conduit, in wich a collecting and discharging device 15, comprising a frame 11 and a driving motor 12 with associated gear box 13 driving a pair of chains 14, is mounted.

The device 15 comprises a number of parallel bars having stepped edges turned towards the flow of water indicated by the arrow 16. Every second bar 17 is stationary and every second bar 18 is displaceable. The bars will thus form one stationary and one displaceable grid.

The bars extend the full breadth of the sewer conduit 10, and form a combined sieve and transporter. The inclination of the bars is selected so the terraces 19 at the stepped bars are located substantially horizontal, when the device is mounted for operation in the conduit 10. The terraces 19 may possibly be given a slight inclination inwards so matter resting thereon, does not show any tendency to fall of the terraces. These are about as broad as the height of the steps.

The displaceable bars 18 will perform a scissoring movement in relation to the stationary bars 17, and as will be evident from the following description, solid matter collecting at the grid structure will be gradually moved upwards along the bars.

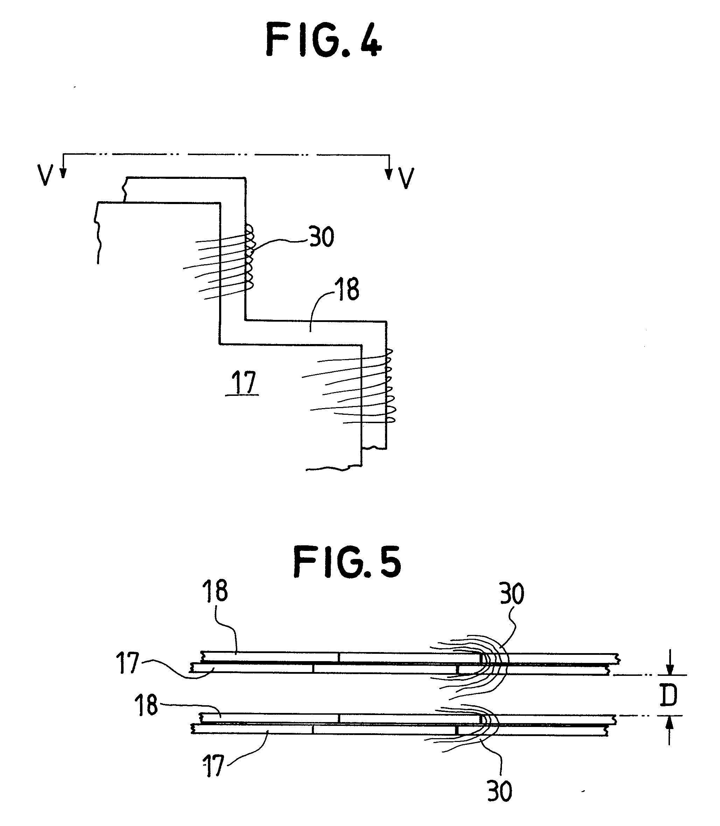

One displaceable bar 18 is preferably located adjacent to one stationary bar so as to be guided thereby. The distance D between a displaceable bar and a stationary bar in an adjacent pair of bars can be selected with respect to the degree of sieve action desired. (Figure 5). The present arrangement ensures a very fine-mesh grid structure not obtainable with other designs including displaceable bars.

The solid matter flowing through the sewer is often agglomerated into fibrous lumps 30, which are first caught at the vertical sides of the steps, and are pressed against the samt by the flow of water.

As the vertical sides of two adjacent sides move in relation to each other the lumps 30 are gradually pushed upwards and finally slide onto the adjacent terrace, whereupon the climb along the following vertical sides will
start.

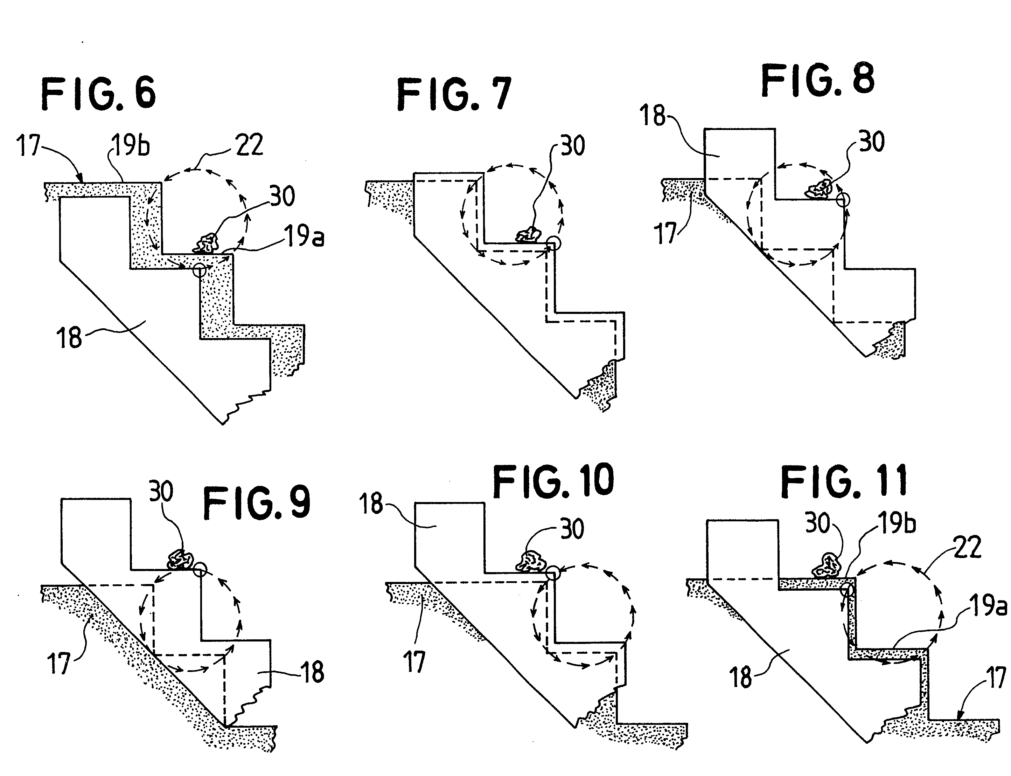

That will be best illustrated in Figures 6 - 11.

The displaceable bars 18 are mounted upon a beam structure 20 extending below the bars. In very broad sewer
conduits there may be two or more like units with independent driving means. A rod 26 extends outwards, about perpendicularly to the place of the bars at each end of the
bar structure 20. Each rod carries at its distal end an
eccentric disc 21.

The two outermost displaceable bars 18 each carries an
upwardly directed rod 27, upon which an eccentric disc 21a
is mounted.

The pair of eccentric discs 21, 21a to each side of the
group of displaceable bars 18 is interconnected by one of
the chain 14, which as is mentioned above is driven by the
power source 12, 13.

The mounting of the displaceable bars 18 is thus such
that they will follow the movements of the eccentric discs,
which means that any point at the terraces 19 of the steps
will move in a closed circuitous path 22.

Refuse matter, caught by the grid formed by the bars
will due to the specific relative movement between adjacent
terraces 19 at the bars, which provides a vertical component of movement, be successively pushed upwards along the
stationary bars 17, as the displaceable bars perform their
collecting and discharging movements.

The pattern of movement is illustrated in Figures 6 -
11, which show portions of two adjacent bars 17 and 18
during various steps in a movement cycle.

The stationary bar 17 is shaded, and the displaceable
bar 18 is supposed to be in front of the stationary bar, as
viewed in the drawings.

As a point of interest the corner between the terrace
and the vertical side in the displaceable bar is used, and
in Figure 6 a lump of refuse 30 rests upon step 19a of the
stationary bar 17. The corresponding terrace of the dis-

5

placeable bar 18 is located below and inside of the step in bar 17.

In Figure 7 the step in bar 18 has moved outwards and upwards and has lifted the lump 30 from step 19a.

This movement continues during the following phases of the circuitous path 22 illustrated in Figures 8 and 9 during which the lump 30 is lifted still higher. In Figure 10 the step starts to move inwards/downwards.

In Figure 11 the step of bar 18 has slid below the step of bar 17, and the lump 30 is now deposited upon the terrace 19b of bar 17.

This movement will continue until the lump reaches the top of the grid structure.

When the collected matter reaches the upper end of the conveyor it is transferred into a delivery conduit 24, due to the action of a reciprocable piston compactor 25 of arbitrary known kind.

It is evident, that the operation as well as the specific bar profiles may be modified within the idea of the invention, and that further variations are possible within the scope of the appended claims.

6

## CLAIMS

1. A device for collecting and discharging solid matter carried in sewage water and comprising a grid (15) mounted in a sewer and including at least some displaceable bars (18), c h a r a c t e r i z e d in that the grid stucture is arranged obliquely with respect to the flow of sewage water, and includes alternate stationary bars (17) and displaceable bars (18), the edges of said bars turned towards the flow direction of the water being uniformly stepped, and the displaceable bars (18) being interconnected to form at least one unit, operated by a mechanism (12, 20, 21) adapted to impart a movement upon the bars (18) so any point at the portions thereof adapted to collect and to discharge matter performs a closed circuitous path (22) including a vertical component of movement within each path.

2. A device according to claim 1, c h a r a c t e - r i z e d in that the inclination of the bars (17, 18) is selected so the terraces (19) of the steps are, in use, substantially horizontally orientated, the terraces being about as broad as the steps are high.

3. A device according to either of claims 1 or 2, c h a r a c t e r i z e d in that the displaceable bars (18), within each unit, are interconnected by a beam structure (20) running transversely below the bars, the operating mechanism comprising a pair of rods (26) projecting from the beam structure and arranged substantially perpendicularly to the plane of the bars, as well as a further rod (27) attached to each displaceable bar (18) located outmost in the unit of bars, said arms (26, 27) each carrying an eccentric disc (21, 21a), interconnected in pairs by chains (14) and driven by a common power source (12).

4. A device according to either of the preceeding claims, c h a r a c t e r i z e d by a compacting conveyor (24, 25) located at the top of the grid (15) for removing the collected matter therefrom.

FIG. 1

# FIG. 2

# FIG. 3

# FIG.4

# FIG.5

FIG. 6    FIG. 7    FIG. 8

FIG. 9    FIG. 10    FIG. 11